# EUROPEAN PATENT APPLICATION

(11) **EP 4 844 605 A1**
(43) Date of publication of application: **25.11.2026**
(21) Application number: 26179922.5
(22) Date of filing: 20.05.2026
(51) Int. Cl.: G06F 16/35, G06N 3/00

(54) **METHOD AND SYSTEM FOR AUTOMATICALLY UPDATING TYPE TREE FOR LARGE-SCALE UNSTRUCTURED DOCUMENTS**

(30) Priority: 21.05.2025 KR 20250066052
(71) Applicant: Korea Electronics Technology Institute, Bundang-gu, Seongnam-si Gyeonggi-do 13509 (KR)
(72) Inventor: MOON, Jae Won, 13509 Seongnam-si, Gyeonggi-do (KR); KUM, Seung Woo, 13509 Seongnam-si, Gyeonggi-do (KR); OH, Seung Taek, 13509 Seongnam-si, Gyeonggi-do (KR)
(74) Representative: Isarpatent

(57) **Abstract**

The present invention is an invention that newly defines a type of document and continuously updates a type tree based on the defined type, even in a situation where there is no type of unstructured document, and is a technology for generating and operating an intelligent document type system in which a classification of the unstructured document and a management and expanding of the type tree are automatically performed.

The present invention provides a method and system for automatically updating a type tree for large-scale unstructured documents. The method includes receiving a plurality of unstructured documents and a preset type tree, generating document embeddings for the unstructured documents, clustering the unstructured documents, refining the clusters based on a quality assessment of the clusters, and updating the type tree based on the refined clusters.

## Description

### BACKGROUND

### 1. Field of the Invention

The present invention relates to a technology for automatically defining and classifying document types by analyzing unstructured natural language documents.

More particularly, the present invention relates to a method and device for updating an existing unstructured document type tree using classification results, training an artificial intelligence (AI)-based automatic classifier model, predicting a type of new document in real time, generating statistic on document types, searching for documents corresponding to a specific type, and automatically generating a report on statistics or search results, and corresponds to AI-based document type classification and administrative information system automation technology.

### 2. Discussion of Related Art

The conventional method and system for automatically classifying documents applied to managing administrative document types mostly operate under the premise of a fixed type system. That is, type names should be predefined, and documents, which are generated as new types or may not be classified as existing types, are often categorized as miscellaneous, error, or unclassifiable. However, in actual administrative or public data (e.g., civil complaints, reports, tips, etc.), new problem types continuously emerge. The documents are written in a free form, and in many cases, the existing type structure is only partially defined or has no subtype.

In this situation, the following problems arise.
1. Limitations of Fixed Type System
   (1) Only predefined types can be classified, making it difficult to classify new types when the new types emerge.
   (2) Document classification results are less useful when subtypes (minor categories) are not minutely classified, specific types are omitted, or the like.
2. Reliance on Manual Type Maintenance
   (1) A process of adding new types, merging multiple types, or splitting a single type into multiple types relies entirely on experts or administrators.
   (2) Manually maintaining a type structure in massive data is excessively time-consuming and labor-intensive.
3. Difficulty in Scalability and Maintenance of Type Tree
   (1) Since the type tree is fixed, it is difficult to perform automatic maintenance for merging between types, promotion, and other type.
   (2) Systematic responses are impossible when type management should be repetitively performed.
4. Analysis/Policy Limitation Due to an Unrefined Type Structure
   (1) Similar documents are classified as various names or are grouped into other types, making analysis impossible.
   (2) Due to the low quality of the type system which serves as the basis for statistics, searches, and administrative responses, it is difficult to apply policies.
   Due to the above-described problems, a system capable of automatically defining, expanding, and maintaining types is required. In addition, in relation to the use of artificial intelligence (AI), the following issues arise.
5. Limitation of Learning AI Utilization
   Even with a large amount of accumulated data, the lack of normalized type (label) information makes it difficult to apply AI.

### SUMMARY OF THE INVENTION

The present invention is directed to providing a method and device for automatically generating and refining a type system for unstructured documents (e.g., reports and civil complaints). In particular, the present invention provides a method and device for deriving and refining minor categories based on vast amounts of unstructured documents (unstructured document big data) in a state in which some higher-level categories (major and middle categories) exist but minor category types are not systematically established or are absent, and connecting these minor categories to the existing type tree or expanding the existing type tree.

In addition, the present invention is directed to providing a system that, once a type tree for documents is constructed to a certain level, enables various applications such as automatic classifiers, statistical analysis, and search functions by utilizing the type tree and a system with excellent type maintenance and expandability through a semi-automatic system structure that maintains a balance between human involvement (administrator verification) and artificial intelligence (AI) automation.

Objects of the present invention are not limited to the above-described objects. That is, other objects that are not described may be obviously understood by those skilled in the art from the following specification.

### Means for solving the Problems

A method of automatically updating a type tree for unstructured documents according to an embodiment of the present invention may be performed by a system for automatically updating a type tree for unstructured documents.

The method of automatically updating a type tree for unstructured documents includes receiving, through a communication device or an input interface device, big data including a plurality of first unstructured documents and a preset type tree for classifying unstructured documents, generating keyword groups of each of the first unstructured documents using one of a large language model and a pre-trained machine learning model, and generating first document embeddings for the keyword groups using a first embedding technique, generating one or more clusters by clustering the first unstructured documents using a predetermined semantic-based clustering algorithm based on the first document embeddings, refining the clusters by performing a quality assessment on the clusters based on a predetermined quality indicator, determining representative keywords for each of the clusters based on one of a frequency of occurrence of the keyword groups of the first unstructured documents belonging to each of the clusters and a distance between the keyword groups calculated based on the first document embeddings or a combination thereof, determining, for each of the clusters, which one to apply among an operation of merging the cluster into an existing node of the type tree, an operation of adding the cluster as a new node of the type tree, and an operation of suspending processing of the cluster to update the type tree based on the determination result, and outputting, through an output interface device, a type tree so as to output a hierarchical structure of the type tree and type names corresponding to each node included in the type tree.

The method of automatically updating a type tree for unstructured documents may further include configuring the first unstructured document as input data, configuring, as a label, a type name of a leaf node in the type tree to which the first unstructured document belongs, and generating a classifier model having a function of automatically classifying the unstructured document through machine learning.

The method of automatically updating a type tree for unstructured documents may further include receiving, through the communication device or the input interface device, one or more second unstructured documents, classifying the unstructured documents by inputting the second unstructured document to the classifier model to acquire a type name of the second unstructured document, and outputting, through the output interface device, the type name of the second unstructured document.

A system for automatically updating a type tree for unstructured documents includes a processor, and a memory storing one or more commands executed by the processor.

The one or more commands include: a command to receive, through a communication device or an input interface device, big data including a plurality of first unstructured documents and a preset type tree for classifying unstructured documents; a command to generate keyword groups of each of the first unstructured documents using one of a large language model and a pre-trained machine learning model and generate first document embeddings for the keyword groups using a first embedding technique; a command to generate one or more clusters by clustering the first unstructured documents using a predetermined semantic-based clustering algorithm based on the first document embeddings; a command to refine the clusters by performing a quality assessment on the clusters based on a predetermined quality indicator; a command to determine representative keywords for each of the clusters based on one of a frequency of occurrence of the keyword groups of the first unstructured documents belonging to each of the clusters and a distance between the keyword groups calculated based on the first document embeddings or a combination thereof; a command to determine, for each of the clusters, which one to apply among an operation of merging the cluster into an existing node of the type tree, an operation of adding the cluster as a new node of the type tree, and an operation of suspending processing of the cluster to update the type tree based on the determination result; and a command to output the type tree so as to output a hierarchical structure of the type tree and type names corresponding to each node included in the type tree through an output interface device.

The one or more commands may further include a command to configure the first unstructured document as input data, configure, as a label, a type name of a leaf node in the type tree to which the first unstructured document belongs, and generate a classifier model having a function of automatically classifying the unstructured document through machine learning.

The one or more commands may further include a command to receive one or more second unstructured documents through a communication device or an input interface device, an unstructured document classification command to input the second unstructured document to the classifier model to acquire a type name of the second unstructured document, and a command to output the type name of the second unstructured document through the output interface device.

### BRIEF DESCRIPTION OF THE DRAWINGS

The above and other objects, features and advantages of the present invention will become more apparent to those of ordinary skill in the art by describing exemplary embodiments thereof in detail with reference to the accompanying drawings, in which:
FIG. 1 is a block diagram illustrating a configuration of a system for automatically updating a type tree for unstructured documents according to an embodiment of the present invention;
FIG. 2 is a flowchart for describing a method of automatically updating a type tree for unstructured documents according to an embodiment of the present invention;
FIG. 3 is an example of a screen displaying a list of low-quality clusters;
FIGS. 4 and 5 are examples of a screen for merging clusters;
FIG. 6 is an example of a user interface screen illustrating representative keywords generated in various ways for each cluster; and
FIG. 7 is an example of a screen for modifying a type name assigned to a cluster.

### DETAILED DESCRIPTION OF EXEMPLARY EMBODIMENTS

The present invention relates to a technology for automatically defining or classifying types of unstructured natural language documents by analyzing the unstructured natural language documents. More specifically, the present invention relates to a document classification system and type management technology that generates subtypes based on semantic similarities between documents, even in a state in which the existing type system for unstructured documents in a specific field is incomplete or some types are omitted, and connects the subtypes into a tree-like structure and expands the tree-like structure.

More specifically, the present invention relates to a technical field that extracts key keywords such as target, state, and action from free-form documents, including natural language complaint reports, civil complaints, tips, and reports, derives a minor category (subtype) through clustering of similar documents, automatically constructs a type tree by connecting a node corresponding to the derived minor category to an existing major category node or middle category node of the type tree, or by inserting the node corresponding to the derived minor category as a new node, or expands or updates the constructed type tree.

In addition, the present invention relates to artificial intelligence (AI)-based document type classification and administrative information system automation technology that utilizes type-specific classification results to perform automatic classifier training, real-time type inference for new documents, type statistics, and automation of search and reporting.

Table 1 is an example of a report classification table applied to the Safety e-Report (https://www.safetyreport.go.kr) operating by the Ministry of the Interior and Safety of the Republic of Korea.

**[Table 1]**

| Major Category | Middle Category | Reporting Platform | Description |
|---|---|---|---|
| Safety | Seasonal Intensive Reporting | App or Web | Dedicated Seasonal Intensive Reporting System (Spring: March-May, Summer: June-August, Autumn: September-November, Winter: December-February) |
| | Road/Facility Damage and Malfunction | App or Web | Road, Sidewalk, Streetlight, Traffic light, Bollard, Park Trail, Building, Bridge, Clogged Storm Drain |
| | Construction Site Hazards | App or Web | Safety Helmet, Safety Shoes, Not Wearing a Safety Harness, Failure to appoint safety manager, Damage to safety facilities |
| | Air Pollution | App or Web | Excessive Vehicle Exhaust Emissions, Illegal Burning of Garbage/Waste, Factory Chimney Smoke Emissions, Construction Site Dust/Odor, etc. |
| | Water Pollution | App or Web | Discharge of Sewage/Wastewater/Toxic Substances, River/Ocean Pollution, etc. |
| | Fire Safety | App or Web | Inadequate maintenance and repair request for fire hydrant, Stacking obstacles in corridor/stairway, etc., closing corridor/stairway, Actions that hinder firefighting activity, etc. |
| | Others | App or Web | Other safety/environmental pollution |

As of 2025, the type tree for reports applied to the Safety e-Report includes major category nodes and middle category nodes. Major category items include safety, illegal parking, traffic violations, and inconveniences in daily life, etc. Each major category is further subdivided into a plurality of middle category nodes. For example, a safety item, which is the major category item of the type tree, is divided into middle category items, such as seasonal intensive reports, road/facility damage and failure, construction site hazards, air pollution, water pollution, fire safety, and others, as shown in Table 1.

While some higher-level categories (major and middle categories) of the type tree exist, minor category items, which are subtypes of middle category items, have not been systematically established. The present invention aims to provide a device and method for deriving and refining minor category items from large-scale documents and connecting an existing type tree or expanding the minor category items.

In addition, the present invention provides a device and method that, after constructing a type tree with a quality of a certain level or higher, may utilize the constructed type tree to develop an AI-based automatic classifier, use the developed classifier for various applications such as document statistics analysis or search, or enable a practical update of a type tree through a structure that maintains a balance of AI-based automation by selectively allowing human (administrator) intervention in some of the automated operations.

The present invention originates from the following practical problem situations.

As illustrated in Table 1, the predefined type system is organized only with the major and middle categories but fails to accommodate all types of reports that actually occur. In other words, a much wider variety of report types are being filed to the Safety e-Report compared to the currently defined type tree. In addition, since reporters are not familiar with which labels to select for their reports on an app or web report screen, the classification system of types presented in the current menu has become meaningless. Furthermore, the minor category items are omitted or incomplete in the current type tree. Under these circumstances, most reporters select "others" in the middle category item, so most of the report data are concentrated in "others." Therefore, it is difficult to classify subsequent report data in accordance with the existing classification system, resulting in ineffective policy formulation or budget allocation is not achieved. Furthermore, it is difficult to train an AI model based on the current report data. That is, information on labels to be assigned to the documents is insufficient.

The present invention may generate or expand a classification structure for unstructured documents (e.g., a type tree) even in a situation where there is no type for unstructured documents and generate an AI-based classifier model for classifying unstructured documents through pseudo-label-based weak supervision. In other words, according to the present invention, it is possible to generate and expand an automated type tree and generate a classifier model based on the type tree, thereby reducing the time and cost required for the classification and analysis of the unstructured documents.

Advantages and features of the present invention and methods to achieve them will be elucidated from exemplary embodiments described below in detail with reference to the accompanying drawings. However, the present invention is not limited to exemplary embodiments disclosed below but will be implemented in various forms. The exemplary embodiments of the present invention make disclosure of the present invention thorough and are provided so that those skilled in the art can easily understand the scope of the present invention. Therefore, the present invention will be defined by the scope of the appended claims. Meanwhile, terms used in the present specification are for explaining exemplary embodiments rather than limiting the present invention. Unless otherwise stated, a singular form includes a plural form in the present specification. The word "comprise" or "comprising" used in the present specification will be understood to imply the inclusion of stated component, steps, operations and/or elements but not the exclusion of any other components, steps, operations and/or elements.

Terms used in the specification, "first," "second," etc., may be used to describe various components, but the components are not to be construed as being limited to the terms. These terms may be used to differentiate one component from other components. For example, the "first" component may be named the "'second" component and the "second" component may also be similarly named the "first" component, without departing from the scope of the present invention.

It is to be understood that when one element is referred to as being "connected to" or "coupled to" another element, it may be connected directly to or coupled directly to another element or be connected to or coupled to another element, having the other element intervening therebetween. On the other hand, it should be understood that when one element is referred to as being "connected directly to" or "coupled directly to" another element, it may be connected to or coupled to another element without the other element interposed therebetween. Other expressions describing a relationship between components, that is, "between," "directly between," "neighboring to," "directly neighboring to" and the like, should be similarly interpreted.

In this specification, the "type tree" is a data structure that hierarchically represents document types. For example, the type tree may include one or more major category nodes L1, one or more middle category nodes L2 belonging to each major category node, and one or more minor category nodes L3 belonging to each middle category node. Each node in the type tree has a type name and corresponds to an identifier of a document classified as the corresponding type name. In addition, each node in the type tree may include a document embedding of the document belonging to the corresponding node or may be mapped to the document embedding. This specification focuses on the type tree among the type structures of the unstructured documents. However, the present invention may also be applied to other data formats (e.g., type tables) that express a hierarchical structure of document types.

In this specification, the "unstructured document" refers to unfiltered document data without a fixed structure format. For example, the "unstructured document" may be text data. The "unstructured document" may be a free-form natural language document describing an object and a state or movement of the object. For example, the unstructured document may be a civil complaint report, an opinion, or a tip. The civil complaint report may describe an object (a bicycle road) and its state (damage), such as "The bicycle road is damaged." In addition, the unstructured document may be assigned meta information. For example, the meta information may include the generation time of a document, the time when the system 100 accepts the document, the date and time of incident and location of incident.

When it is decided that the detailed description of the known art related to the present invention may unnecessary obscure the gist of the present invention, a detailed description therefor will be omitted.

Hereinafter, embodiments of the present disclosure will be described in detail with reference to the accompanying drawings. The same means will be denoted by the same reference numerals throughout the accompanying drawings in order to facilitate the general understanding of the present invention in describing the present invention.

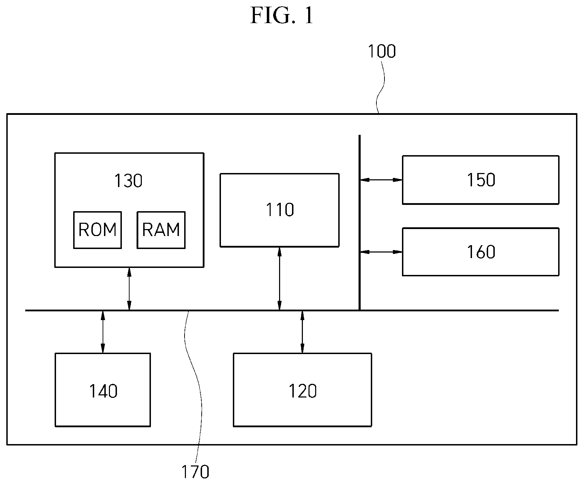

FIG. 1 is a block diagram illustrating a configuration of a system for automatically updating a type tree for large-scale unstructured documents (hereinafter, "system for automatically updating a type tree for unstructured documents" or "system") according to an embodiment of the present invention.

Referring to FIG. 1, a system 100 according to the embodiment of the present invention is configured to include a processor 110, a communication device 120, a memory 130, a storage device 140, an input interface device 150, an output interface device 160, and a bus 170. The system 100 illustrated in FIG. 1 is according to an embodiment, and the components of the system 100 according to the present invention are not limited to the embodiment illustrated in FIG. 1, and some components may be added, changed, or removed as needed.

The processor 110 may be a central processing unit (CPU) or a semiconductor device that executes computer-readable commands stored in the memory 130 or the storage device 140. The memory 130 and the storage device 140 may include various types of volatile or non-volatile storage media. For example, the memory 130 may include a read only memory (ROM) and a random access memory (RAM). In an embodiment of the present disclosure, the memory 130 may be located inside or outside the processor 110, and the memory 130 may be connected to the processor 110 through various known means. The memory 130 may be various types of volatile or non-volatile storage media, and examples of the memory 130 may include a ROM or a RAM.

Accordingly, the embodiment of the present invention may be implemented as a computer-implemented method, or as a non-transitory computer-readable medium having computer-executable commands stored thereon. In an embodiment, when executed by the processor 110, the computer-readable commands may perform the method according to at least one aspect of the present disclosure.

The communication device 120 may transmit or receive a wired signal or a wireless signal.

In addition, the method of operating a system 100 according to the embodiment of the present invention may be implemented in the form of program instructions that may be executed through various computer means and may be recorded in a computer-readable recording medium.

The computer-readable recording medium may include program instructions, data files, data structures, or the like, alone or in combination. The program instructions recorded in the computer-readable recording medium may be especially designed and constituted for the embodiment of the present invention or be known to those skilled in a field of computer software. The computer-readable recording medium may include a hardware device configured to store and execute the program instructions. Examples of the computer-readable recording medium may include magnetic media such as a hard disk, a floppy disk, and a magnetic tape, optical media such as a compact disk read only memory (CD-ROM) or a digital versatile disk (DVD), magneto-optical media such as a floptical disk, a ROM, a RAM, a flash memory, or the like. Examples of the program instructions may include a high-level language code capable of being executed by a computer using an interpreter, or the like, as well as a machine language code made by a compiler.

The processor 110 executes a method of automatically updating a type tree for large-scale unstructured documents (hereinafter referred to as "method of automatically updating a type tree for unstructured documents") by executing one or more computer-readable commands stored in the memory 130.

That is, the memory 130 stores one or more commands executed by the processor 110.

The one or more commands include: a command to receive, through a communication device 120 or an input interface device 150, big data including a plurality of first unstructured documents and a preset type tree for classifying the unstructured documents; a command to generate keyword groups of each of the first unstructured documents using one of a large language model and a pre-trained machine learning model and generate first document embeddings for the keyword groups using a first embedding technique; a command to generate one or more clusters by clustering the first unstructured documents using a predetermined semantic-based clustering algorithm based on the first document embeddings; a command to refine the clusters by performing a quality assessment on the clusters based on a predetermined quality indicator; a command to determine representative keywords for each of the clusters based on one of a frequency of occurrence of the keyword groups of the first unstructured documents belonging to each of the clusters and a distance between the keyword groups calculated based on the first document embeddings or a combination thereof; a command to determine, for each of the clusters, which one to apply among an operation of merging the cluster into an existing node of the type tree, an operation of adding the cluster as a new node of the type tree, and an operation of suspending processing of the cluster to update the type tree based on the determination result; and a command to output the type tree so as to output a hierarchical structure of the type tree and type names corresponding to each node included in the type tree through an output interface device.

According to an embodiment of the present invention, the command to refine the cluster includes a command to calculate quality scores for each of the clusters by performing a quality assessment on the cluster based on a predetermined quality indicator, a command to determine, based on the quality score, whether the cluster is utilized in updating the type tree and configure the cluster to one of a utilized state (or activated state) and a suspended state, and a command to merge clusters whose mutual similarity is greater than or equal to a threshold value among the clusters in the utilized state.

According to an embodiment of the present invention, the command to refine the cluster includes a command to calculate quality scores for each of the clusters by performing a quality assessment on the cluster based on a predetermined quality indicator, a command to determine, based on the quality score, whether the cluster is utilized in updating the type tree and configuring the cluster to one of a utilized state (or activated state) and a suspended state, a command to generate a second document embedding by applying a second embedding technique, which is different from a first embedding technique, to a keyword group of a first unstructured document belonging to a cluster in the utilized state, a command to calculate an extreme point of a probability distribution of the second document embeddings, and a command to split the cluster in the utilized state according to the probability distribution when the extreme point is two or more.

According to an embodiment of the present invention, the command to calculate the quality score may include a command to calculate quality scores for each of the clusters by applying the second embedding technique different from the first embedding technique.

According to an embodiment of the present invention, the command to output the type tree may include a command to output one of the number and frequency of unstructured documents corresponding to a leaf node included in the type tree or a combination thereof.

According to an embodiment of the present invention, the first unstructured document may be a natural language document describing an object and a state of the object.

According to an embodiment of the present invention, the quality indicator may be an indicator calculated based on one of a keyword sharing rate, a semantic distance, a cluster consistency, and a cluster size or a combination thereof.

According to an embodiment of the present invention, the keyword sharing rate may be a keyword overlap degree between the keyword groups of the unstructured document included in the cluster.

According to an embodiment of the present invention, the semantic distance may be an average distance between second document embeddings calculated by applying the second embedding technique different from the first embedding technique to the keyword group of the unstructured document included in the cluster.

The cluster consistency may be a reciprocal of the number of extreme points in a probability distribution of the second document embeddings.

The cluster size may be the number of unstructured documents included in the cluster.

According to an embodiment of the present invention, the one or more commands may further include a command to configure the first unstructured document as input data, configure, as a label, a type name of a leaf node in the type tree to which the first unstructured document belongs, and generate a classifier model having a function of automatically classifying the unstructured document through machine learning.

According to an embodiment of the present invention, the one or more commands may further include a command to receive one or more second unstructured documents through a communication device or an input interface device, an unstructured document classification command to input the second unstructured document to the classifier model to acquire a type name of the second unstructured document, and a command to output the type name of the second unstructured document through the output interface device.

According to an embodiment of the present invention, the one or more commands may further include a command to generate keyword groups of each of the second unstructured documents using one of the large language model and the pre-trained machine learning model, a command to generate first document embeddings for the keyword groups of the second unstructured documents using the first embedding technique, and a command to update the type tree based on the keyword groups of the second unstructured documents and the first document embeddings.

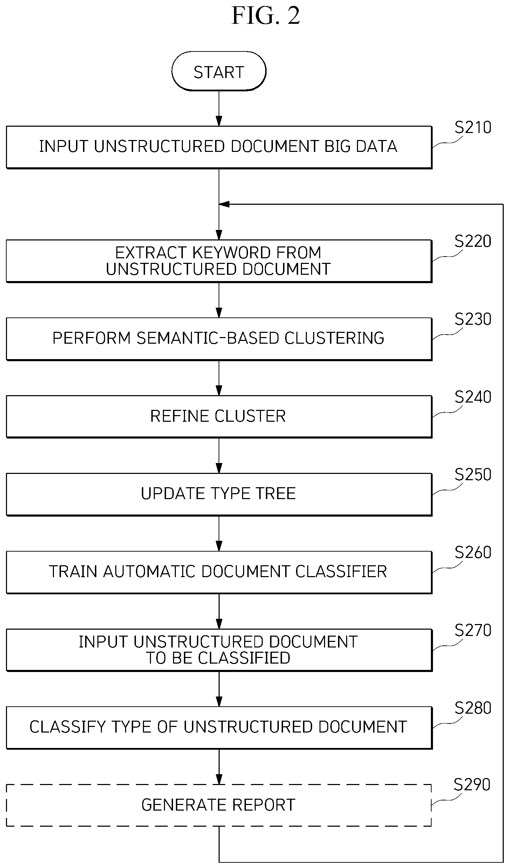

FIG. 2 is a flowchart for describing a method of automatically updating a type tree for unstructured documents according to an embodiment of the present invention.

Referring to FIG. 2, a method of automatically updating a type tree for unstructured documents according to an embodiment of the present invention includes operations S210 through S280 and may further include operation S290. The method of automatically updating a type tree for unstructured documents illustrated in FIG. 2 follows an embodiment, and the operations of the method of automatically updating a type tree for unstructured documents according to the present invention are not limited to the embodiment illustrated in FIG. 2 and some operations may be added, modified, or omitted as needed.

Hereinafter, each operation of the method of automatically updating a type tree for unstructured documents according to an embodiment of the present invention will be described with reference to FIG. 2. The method may be performed in various ways, but for convenience of description, is assumed to be performed by the system 100.

Operation S210 is an operation of receiving unstructured document big data.

The processor 110 receives big data including a plurality of first unstructured documents and a preset type tree for classifying the unstructured documents via the communication device 120 or the input interface device 150.

For example, the first unstructured document may be a free-form natural language document describing an object and a state of the object. For example, the first unstructured document may be a civil complaint report, an opinion, or a tip. The civil complaint report may describe an object (a bicycle road) and its state (damage), such as "The bicycle road is damaged."

In addition, the first unstructured document may be assigned meta information. For example, the meta information may include the time of document receipt, the time of an incident, and the location of incident.

Operation S220 is an operation for extracting keywords from an unstructured document.

The processor 110 generates keyword groups of each of the first unstructured documents using one of a large language model and a pre-trained machine learning model and generates first document embeddings for the keyword groups using a first embedding technique. That is, the processor 110 applies the first embedding technique to the keyword group (or refined sentence) to generate the first document embeddings.

For example, the first embedding technique may be a Korean Bidirectional Encoder Representations from Transformers (KoBERT)-based embedding technique, a Korean Language Understanding Evaluation-Robustly Optimized BERT Approach (KLUE-RoBERTa)-based embedding technique, or an ensemble of the two techniques.

For example, the keywords included in the keyword group may include objects, states, and required actions.

In addition, the processor 110 may extract a summary of the first unstructured document using one of a large language model and a pre-trained machine learning model. For example, when a sentence in the first unstructured document is "A problem occurred on a bicycle road. The road is partially rutted and damaged, and it is expected that a major problem will occur in the future.", the summary could be "Concerns about problems due to bicycle road damage."

The processor 110 may generate an embedding for the summary using the first embedding technique and use the embedding for the summary as the first document embeddings.

For reference, when summarizing the unstructured document using the large language model, the large language models demonstrate excellent performance in correcting typographical errors and extracting summaries of documents. That is, the large language model may be appropriately utilized for refining the unstructured documents.

However, it is difficult to perform the structured classification or label construction task using only the large language model. This is because large language models tends to continuously change classification names (referred to as "type names" in the present invention) depending on the execution timing and generate an excessive number of minor category (cluster) items.

Hereinafter, a specific example in which the system 100 executes operation S220 when the first unstructured document is the complaint report will be described. For example, the first unstructured document may be "A problem occurred on a bicycle road. The road is partially rutted and damaged, and it is expected that a major problem will occur in the future."

In this operation, the processor 110 may automatically extract keywords containing key semantic elements from the first unstructured document using the large language model and the pre-trained machine learning model. The extracted keywords serve as the basis for the type classification and clustering of the unstructured document.

First, the processor 110 preprocesses the sentence included in the first unstructured document. Specifically, the processor 110 may perform sentence splitting, particle removal, stopword removal, and morphological analysis. In this process, the processor 110 may utilize various machine learning models and large language models.

In addition, the processor 110 extracts the keywords from the first unstructured document by an operation of recognizing entity names (object names) included in the first unstructured document. For example, in the case of the complaint report, the most important information is the subject of the report and its state. In this process, the processor 110 may utilize various machine learning models and large language models. For example, the subject of the report is an object where an actual problem occurred, such as a bicycle road, a sidewalk block, a metal plate cover, etc. The state of the subject of the report may be expressed as impairment, damage, lifting, corrosion, etc. In addition, the processor 110 may also extract necessary measures or location information as keywords.

Furthermore, the processor 110 filters and refines the extracted keywords or sentences. For example, based on the pre-stored dictionary file, the processor 110 may remove (filter) extracted keywords with unclear meanings (e.g., words not included in a dictionary file) or words with high generality (e.g., words with high frequency or comprehensive meaning), or may then either maintain the extracted keywords in an independent form or combine the extracted keywords to generate new keywords.

The processor 110 may utilize the keywords or refined sentences extracted from the first unstructured document as basic information for type names assigned to unstructured document clusters to be generated later. For example, the processor 110 may generate a keyword group by combining keywords for objects and states. For example, the keyword group may be something like (bicycle road, damage) or (sidewalk block, lifting). The keyword group may also be composed of a single keyword. That is, the single keyword may form the keyword group.

In this embodiment, the processor 110 applies the first embedding technique to the keyword group of the first unstructured document and/or refined sentences to generate the first document embeddings for the first unstructured document.

Operation S220 is a key task that enhances the explanatory power of the unstructured document cluster or AI-based classifier model that will be generated later. In other words, the keyword group (or keywords) of the first unstructured document extracted in this operation may be reused for type name generation, cluster similarity assessment, classification learning, etc.

Based on this operation, the system 100 may structure semantic elements based on natural language even in situations where structured fields are not provided.

Operation S230 is the semantic-based clustering operation.

This operation is an operation of automatically generating minor category candidates for the type tree by reflecting the semantic similarity between the unstructured documents and allowing similar unstructured documents to form a single cluster. The present invention considers embedding-based semantic similarity rather than simple word frequency in performing this operation.

The processor 110 clusters the first unstructured document based on the semantic similarity between documents using a predetermined semantic-based clustering algorithm based on the first document embeddings, thereby generating one or more clusters (minor category candidates to be included in the type tree). In other words, the processor 110 uses the first document embeddings to group similar documents among multiple first unstructured documents, thereby generating clusters. For example, K-Means, Hierarchical Density-Based Spatial Clustering of Applications with Noise (HDBSCAN), and Agglomerative Clustering may be applied as the clustering algorithm.

Hereinafter, a specific example in which the system 100 executes operation S230 when the first unstructured document is the complaint report will be described.

For example, when the first document corresponding to the first unstructured document is "Cracks occur on a bicycle road" and the second document is "Cracks on a bicycle road," the first and second documents should be included in the same cluster.

First, in operation S220, the processor 110 applies the first embedding technique to the keyword group of the first unstructured document or the refined sentences to generate the first document embeddings. Depending on the configuration, the processor 110 may generate the first document embeddings based on keyword-enhanced sentences.

Furthermore, in operation S230, the processor 110 may apply a predetermined clustering algorithm to organize the plurality of first unstructured documents into one or more clusters. For example, the processor 110 may utilize any clustering algorithm that may be utilized after document embedding, such as K-Means, Density-Based Spatial Clustering of Applications with Noise (DBSCAN), HDBSCAN, Agglomerative Clustering, and may utilize multiple clustering results simultaneously. For example, the processor 110 may determine a final cluster by combining the results of applying multiple clustering algorithms or may verify the results of a specific clustering algorithm with the results of applying another clustering algorithm.

As a result of performing this operation, the processor 110 may obtain the results of assigning multiple first unstructured documents to one or more clusters. Specifically, the processor 110 may acquire an identifier of the first unstructured document corresponding to each cluster and the keywords (or sentences) of the corresponding first unstructured document.

Meanwhile, parameters of the clustering algorithm may include the number of clusters or cohesion. That is, the clustering algorithm may be configured to generate clusters based on the predetermined number of clusters or to automatically determine clusters based on a predetermined cohesion. However, when there are no type names for the previously generated minor category items, it may be advantageous to initially generate a large number of clusters by configuring the number of clusters greater than or equal to a threshold value. This is because generating a large number of candidate clusters first and then refining the clusters through merging or suspension may sometimes lead to better results than generating clusters by specifying the limited number from the outset.

Operation S240 is an operation of refining the clusters.

This operation assesses the quality of the clusters generated in operation S230 and, based on the quality scores that are the assessment results, selects utilizable clusters or performs merging, splitting, refining (deleting heterogeneous documents), suspension, etc., of clusters. This operation may be considered the most crucial operation of the present invention. Through this operation, the system 100 ensures the classification accuracy and effectiveness of the unstructured documents. In other words, through this operation, the system 100 may secure the quality of the type tree and classifier. Furthermore, this operation may be fully automated, but depending on the configuration, it may actively reflect a manager's decision-making. Practical results may be achieved through a balance between AI-based automation and administrator intervention.

In this operation, the processor 110 performs the quality assessment on each cluster based on a predetermined quality indicator and refines each cluster based on this assessment. In other words, the processor 110 calculates a quality score for each cluster based on the quality indicator and refines each cluster based on the quality score. In this specification, the term "refining" the clusters encompasses not only the task of deleting documents belonging to the clusters that have relatively low similarity with other documents ("refining" in a narrow sense), but also the suspension, merging, and splitting of the clusters.

As described above, the processor 110 performs the quality assessment on the clusters based on a predetermined quality indicator and calculates a quality score for each cluster. The quality assessment may be performed using the first embedding technique applied to the clustering in operation S230. However, it may be more preferable to use the second embedding technique different from the first embedding technique. For example, when the first embedding technique is the KoBERT-based embedding technique, the second embedding technique may be the KLUE-RoBERTa-based embedding technique.

The quality indicator is an indicator calculated based on one of a keyword sharing rate, a semantic distance, a cluster consistency, and a cluster size or a combination thereof.

The keyword sharing rate may be a keyword overlap degree between the keyword groups of the unstructured document included in the cluster. The semantic distance may be an average distance between second document embeddings calculated by applying the second embedding technique different from the first embedding technique to the keyword group of the unstructured document included in the cluster. Then, the cluster consistency may be a reciprocal of the number of extreme points in a probability distribution of the second document embeddings. In addition, the cluster size may be the number of unstructured documents included in the cluster.

The processor 110 determines, based on the quality score, whether to utilize each cluster generated in operation S230 for updating the type tree, and configures the cluster to one of the utilized state (or activated state) and the suspended state. That is, the cluster in the utilized state is utilized for updating the type tree, and the cluster in the suspended state is temporarily suspended from being utilized. For example, the processor 110 may configure the state of the cluster whose quality score is below a predetermined threshold value to the suspended state (e.g., assigning "-1" as the identifier of the cluster). For example, in the case where the number of unstructured documents included in the cluster is too few, the cluster size may be significantly smaller than other clusters, so the quality score may be calculated low and the cluster may be configured to the suspended state by the processor 110. In addition, when the contents within the cluster is inconsistent or the documents within the cluster are heterogeneous, the corresponding cluster may have a low keyword sharing rate, a large semantic distance, a low cluster consistency, so the quality score may be calculated low and the cluster may be configured to the suspended state by the processor 110.

The cluster configured to the suspended state or the document included in the suspended state may be changed to the utilized state through the semantic-based clustering process as a new unstructured document (e.g., the second unstructured document) is added later.

The processor 110 may merge clusters whose mutual similarity is greater than or equal to the threshold value, among the clusters in the utilized state. For example, the processor 110 may calculate the representative embedding of each cluster by calculating the average or extreme point of the probability distribution of the document embeddings corresponding to each cluster and may calculate the inter-cluster similarity by calculating the cosine similarity of the representative embeddings between the clusters. The method of calculating an inter-cluster similarity according to the present invention may use other known methods other than the examples described above and is not limited to the examples described above.

In addition, even with a high quality score, the cluster may be split when the characteristics (embeddings) of the documents included in the cluster significantly differ. That is, the processor 110 may split a single cluster whose internal documents are heterogeneous, thereby generating new clusters.

For specific example, the processor 110 may apply the second embedding technique different from the first embedding technique to the keyword group of the first unstructured document belonging to the cluster in the utilized state to generate the second document embedding, calculate the extreme point of the probability distribution of the second document embeddings, and when there are two or more extreme points, split the cluster in the utilized state based on the probability distribution.

The embodiment in which different embedding techniques are applied to the clustering and cluster quality assessment has been described above. As another example of the same intent, during the quality assessment of each cluster, a cross-validation approach may be introduced that does not rely on a single embedding representation, but applies the second embedding technique different from the first embedding technique used in the clustering process. This allows for the semantic consistency of documents within the cluster to be confirmed in a more general representation space, thereby preventing model bias or distortion due to specific sentence representation methods. In other words, during the quality assessment of the cluster, the embedding model (the second embedding technique) with a different representation space from the embedding vector (the embedding vector calculated by the first embedding technique) used for clustering may be utilized to derive an auxiliary quality indicator. This embodiment is a verification procedure that double-checks the semantic cohesion of the documents within the cluster and the possibility of generalization of the external representation. For example, the KoBERT-based embedding technique may be utilized for clustering and primary quality indicator calculation, while the KLUE-RoBERTa-based embedding technique may be utilized for auxiliary quality indicator calculation.

Meanwhile, the processor 110 may delete ("refine" in a narrow sense) documents (heterogeneous documents) that do not fit the characteristics of the cluster among the unstructured documents included in each cluster. For example, the processor 110 may calculate the document embedding of each document included in a specific cluster using the first embedding technique or the second embedding technique, and based on the similarity between the document embeddings or the probability distribution of the document embeddings, may exclude the unstructured documents with low similarity or corresponding to outliers from the corresponding cluster. The excluded unstructured documents are processed in the suspended state, and their status may be determined again based on the similarity with the second unstructured document added later.

The processor 110 may repeatedly merge and split clusters and delete heterogeneous documents to generate high-purity clusters. During this process, the processor 110 may re-cluster clusters with low quality scores or excluded unstructured documents and re-calculate quality scores and re-assess newly generated clusters generated through the merging or splitting.

Operation S240 may be performed completely automatically by the system 100 without human intervention. However, Depending on the configuration, a user (e.g., manager or administrator) intervention may be allowed in each process of quality assessment, cluster merging, splitting, and deletion of heterogeneous documents. For example, a manager may intervene in the final clustering results, merging clusters, splitting clusters, or excluding specific documents from specific clusters. The allowance of such intervention may be configured by a manager of the system 100, focusing on the practical utility of the type tree or the classifier.

Hereinafter, a specific embodiment in which the system 100 executes operation S240 will be described.

Through operation S230, the system 100 may acquire the refined clusters composed of the first unstructured document. Specifically, through operation S230, the system 100 acquires a list of cluster identifiers for the first unstructured document and a list of unstructured document identifiers corresponding to each cluster identifier. The clusters derived through step S230 are determined based on only one embedding technique (the first embedding technique), using either the number of clusters or cohesion as a criterion. Therefore, among the clusters, there may be clusters with low purity. For example, a cluster for a report of a damaged cover may include unstructured documents for sidewalk damage or manhole damage. Therefore, this operation requires an operation to improve the purity of the cluster.

First, the processor 110 performs the quality assessment on the generated clusters based on a predetermined quality indicator and calculates a quality score for each cluster.

The quality indicator is an indicator calculated based on one of a keyword sharing rate, a semantic distance, a cluster consistency, and a cluster size or a combination thereof.

The keyword sharing rate refers to the degree of overlap among key terms, and may be a keyword overlap degree between the keyword groups of the unstructured document included in the cluster. The more unstructured documents within the cluster share keywords (or words), the higher the purity of the corresponding cluster may be considered.

In addition, the semantic distance is an indicator of the semantic distance between the documents. Specifically, the semantic distance may be an average distance between the document embeddings calculated by applying the first or second embedding technique to the keyword groups (or summaries) of the unstructured documents included in the cluster.

In addition, the cluster consistency is an indicator that represents whether the cluster is focused on a specific object (e.g., object). For example, the cluster consistency may be expressed as the reciprocal of the number of extreme points in the probability distribution of the document embeddings. For another example, when the variance in the size of the keyword groups (the number of keywords) of each unstructured document in a specific cluster is relatively large compared to other clusters, the cluster consistency is considered to be low.

In addition, the cluster size is an indicator indicating a scale of a cluster, and may be expressed by the number of unstructured documents included in the cluster.

In this operation, the quality assessment of the cluster may be performed using both the first and second embedding techniques. For example, after calculating the keyword sharing rate, the semantic distance, the cluster consistency, and the cluster size using both the first and second embedding techniques, the weighted sum of the quality score calculated through the first embedding technique and the quality score calculated through the second embedding technique may be used as the quality score for quality assessment.

The present invention proposes a cross-validation method that introduces the embedding technique not used in the clustering process for cluster quality assessment. That is, when the first embedding technique is used in the clustering process, the second embedding technique different from the first embedding technique is used in whole or in part to calculate the quality score for the cluster. This is to verify the generality of semantic expressions and generality in the external representation space.

When the quality score has been calculated for each cluster, the processor 110 performs an operation of refining clusters based on the quality score.

The processor 110 configures low-quality clusters with low quality scores to the suspended state. For example, clusters with low cluster consistency due to exceptional expressions, semantic mixing, etc., or clusters that are too small may be configured to the suspended state. For example, the processor 110 may configure the cluster to the suspended state by assigning an identifier of -1 to the cluster or by classifying the cluster as another type.

In this manner, the low-quality clusters may be automatically suspended. However, in the case of a special domain, there may be parts that may not be resolved by general natural language processing, so the processor 110 may suspend the low-quality cluster after a manager confirms the low-quality cluster.

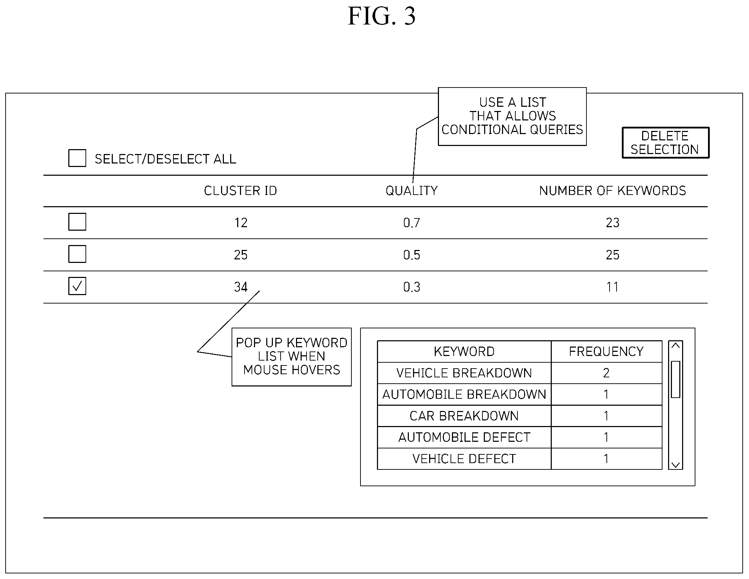

FIG. 3 is an example of a screen displaying a list of low-quality clusters. The processor 110 may display the list of the low-quality clusters through the output interface device 160. The screen in FIG. 3 displays the cluster identifier, the quality scores for each cluster, and the number of keywords (or keyword groups). A manager may delete a specific cluster or all clusters. Upon deletion, the cluster changes to the suspended state (e.g., the cluster identifier is changed to -1). When a manager moves a mouse cursor close to a cluster identifier, the keyword list for the cluster pops up. The keyword list may display the frequency of each keyword. In a state where the manual intervention by a manager is possible, the administrator may refer to the keyword list displayed on the cluster list screen to determine whether to split or suspend the cluster.

In addition, the processor 110 may merge clusters whose mutual similarity is greater than or equal to the threshold value, among the clusters in the utilized state. For example, the processor 110 may determine two or more clusters with high keyword or sentence similarity as similar clusters and perform a merging process when the inter-cluster similarity is equal to or greater than a threshold value. The inter-cluster similarity may be calculated based on the document embedding. The specific method of calculating the similarity may utilize the known techniques.

When a plurality of clusters are similar to each other, the type name of a new cluster generated through the merging may be determined based on a central cluster serving as a criterion for similarity determination among the plurality of clusters.

The system 100 may automatically perform the inter-cluster merging process. However, in the case of the special domain, a manager may intervene in confirming the merging or in manually performing the merging.

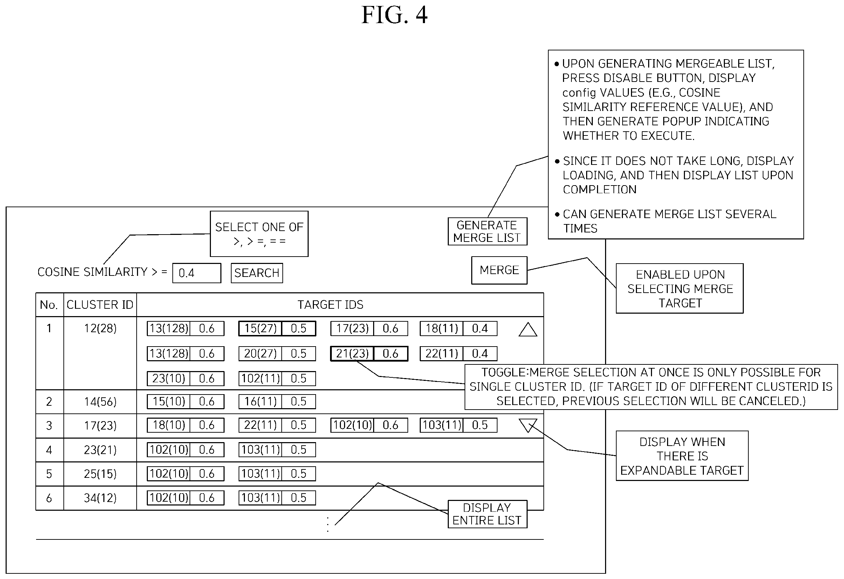

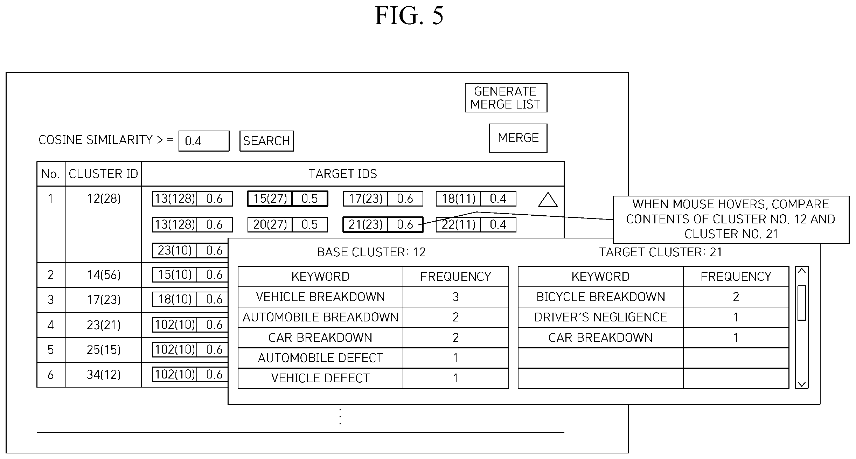

FIGS. 4 and 5 are examples of a screen for merging clusters.

A manager may perform the inter-cluster merging through the screen in FIG. 4. The manager may determine the threshold value of the cosine similarity, which serves as the basis for the inter-cluster merging, through the screen. The processor 110 proposes clusters to be merged based on the threshold value set by the manager and provides a list of merged clusters when the manager instructs execution. In addition, on this screen, when a manager positions a mouse on a specific cluster, the processor 110 provides the keyword list of the cluster and the clusters to be merged through the output interface device 160.

When the inter-cluster merging is performed, the processor 110 re-measures the inter-cluster similarity. Furthermore, the processor 110 may generate a list of identifiers of the clusters before merging for the cluster generated through the merging and generate a list of first unstructured documents (i.e., a list of document identifiers) included in the new cluster.

In addition, even with a high quality score, the cluster may be split when the characteristics (embeddings) of the documents included in the cluster significantly differ. That is, the processor 110 may split a single cluster whose internal documents are heterogeneous, thereby generating new clusters. For example, when the cluster related to the damaged cover contains documents whose objects are a sidewalk, a manhole, and a steel plate cover, the processor 110 splits the cluster. While the cluster splitting process may be performed automatically, the system 100 may allow the manager's intervention depending on the configuration.

For example, when the cluster splitting is configured automatically, the processor 110 may automatically split target clusters based on keyword diversity, object distribution, and whether sentence embedding distances include multiple extreme points, or the like.

When cluster splitting is configured to manual, the manager may confirm the cluster splitting proposal of the processor 110 and then perform confirmation or additional splitting.

In addition, a manager may intervene in the deletion, modification, etc., of the unstructured documents included in the cluster.

As a result of performing this operation, the processor 110 may derive a list of redefined cluster identifiers, the list of cluster identifiers in the suspended state, and a quality score log for each cluster through merging/splitting/marinating.

Through this operation, the system 100 may ensure the reliability of cluster classification and obtain refined candidates for generating type names. In other words, this operation is a cluster filtering operation that generates type names to be assigned to minor category nodes included in the type tree, and serves as the basis for updating the type tree and training a classifier. In addition to the above-described cluster merging, cluster splitting, and heterogeneous document deletion methods, various known methodologies may be applied in this operation.

Operation S250 is an operation of updating the type tree.

This operation is an operation of automatically generating a type name (minor category name) for the cluster based on the representative keywords of the first unstructured documents included in the cluster and updates the type tree by including the clusters refined in step S240 in the existing nodes of the type tree or by adding the clusters as new nodes.

The processor 110 may determine representative keywords for each of the clusters based on one of a frequency of occurrence of the keyword groups of the first unstructured documents belonging to each of the clusters and a distance between the keyword groups calculated based on the first document embeddings or a combination thereof, and assign the determined representative keyword as the type name (minor category name) for the corresponding cluster. Specifically, the processor 110 may automatically generate a type name for a cluster based on term frequency-inverse document frequency (TF-IDF), embedding core words, frequency, etc.

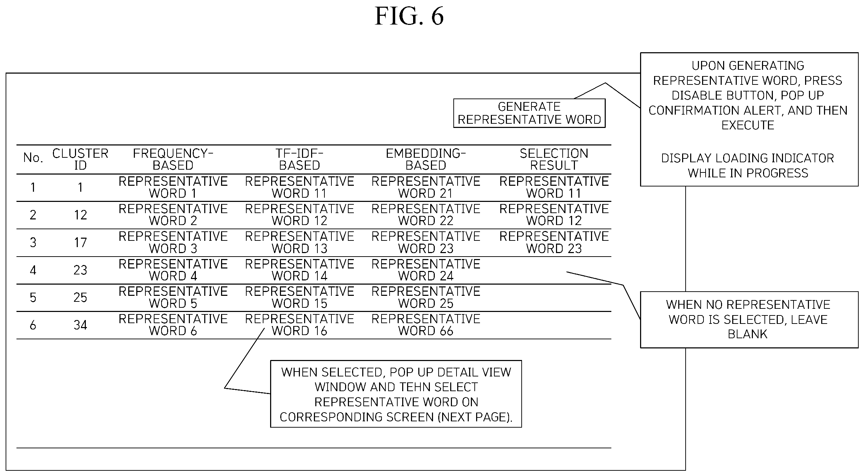

FIG. 6 is an example of a user interface screen illustrating representative keywords generated in various ways for each cluster. Through this user interface, a manager may command the processor 110 to generate representative keywords and view the derived representative keywords for each cluster.

In addition, a manager may modify or expand the type names determined by the processor 110 based on the representative keywords. In this way, it is possible to secure both clarity and administrative appropriateness in the type names assigned to each cluster.

Hereinafter, embodiments of the present invention will be described in detail.

Each (refined) cluster includes one or more first unstructured documents. For example, a cluster identified as C-17 (hereinafter referred to as the "C-17 cluster") may include documents related to "broken pavement block," "lifted pavement block," and "broken pavement block." The processor 110 extracts representative keywords with high frequency of occurrence or importance from the first unstructured documents included in the C-17 cluster. For example, the representative keywords may be "pavement block," "damaged," "broken," and "lifted." The processor 110 automatically generates a type name for the C-17 cluster based on the extracted representative keywords. For example, the processor 110 may generate a type name (e.g., "pavement block damage") by combining an object and a state. As another example, the processor 110 may generate a type name for the C-17 cluster based on the frequency of occurrence of the representative keyword or the center of the embedding of the representative keyword. When the center of the embedding is used as the criterion, the representative keyword close to the center of the embedding may be configured as the type name for the C-17 cluster. As another example, the processor 110 may automatically generate a type name to be assigned to the C-17 cluster using a large language model.

Depending on the configuration, a manager (e.g., an administrator) may intervene in the determination or modification of the type name after the type name has been generated. For example, the processor 110 generates multiple type name candidates based on various combinations or similar expressions of the representative keywords of the C-17 cluster. For example, the type name candidates may include "impaired pavement block," "abnormal pavement block," or "damaged pavement block." The manager may select one of the type name candidates and finally confirm the selected type name candidate as the type name for the C-17 cluster.

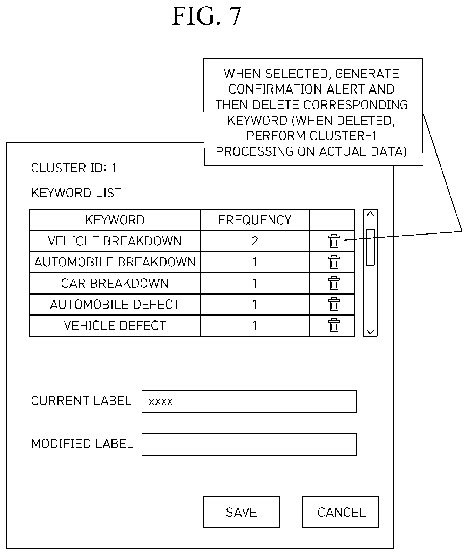

FIG. 7 is an example of a screen for modifying a type name assigned to a cluster. The screen displays the keywords and frequencies of a specific cluster selected by the user, along with the currently configured type name (indicated as "label"). Users may modify the type name through this screen.

The confirmed type name may be inserted into the existing type tree. The processor 110 registers the type name assigned to each cluster as an official minor category name in the type tree. Each minor category name (type name) corresponds to an identifier of one or more primary unstructured documents. The manager may view a list (identifier list) of primary unstructured documents corresponding to the minor category name through the user interface screen.

The process of determining a type name is the process of converting clusters into clear human-centered semantic units. In this process, by considering both the speed of automatic type name generation and the policy and administrative judgments of the manager, it is possible to determine type names that may be utilized in practice.

After the cluster type name is confirmed, the processor 110 determines whether to apply one of the following actions to each cluster: merging the cluster into an existing node of the type tree, adding the cluster as a new lower-level node (e.g., minor category) in the type tree, adding a new upper-level node (e.g., middle category) in the type tree, and suspending cluster processing, and based on the determination result, updates the type tree.

That is, the processor 110 may directly link a cluster to a leaf node of the existing type tree. For example, when the existing type tree is composed of a major category L1, a middle category L2, and a minor category L3, a specific cluster is arranged as a lower-level node L4 of the minor category L3 with the highest similarity. When, based on similarity, there is no higher-level node to arrange clusters, the processor 110 may temporarily arrange the clusters under another node (other type) in the existing type tree. When clusters are repeatedly introduced into subnodes of other nodes, causing their size to exceed a threshold value, the processor 110 may generate new types to expand the structure of the existing type tree. For example, when the number or ratio of documents corresponding to subnodes of other nodes exceeds a threshold value, the processor 110 expands the type tree structure by newly generating the major category node L1 or a middle category node L2 in the type tree.

Hereinafter, an embodiment in which the system 100 arranges clusters in the existing type tree will be described in detail.

In this embodiment, the processor 110 searches for leaf nodes (e.g., minor category items L3 or middle category items L2) of the existing type tree to which to connect the automatically generated clusters, based on the similarity between the refined clusters and each node (type) of the existing type tree.

A method of analyzing a similarity between clusters and existing nodes (types) may vary. For example, the node in the existing type tree may be assigned keywords, descriptions of the nodes, and/or one or more unstructured documents. The processor 110 may analyze similarity by comparing a keyword group (keyword) and representative sentence (or summary) of a cluster with keywords or descriptions assigned to leaf nodes of the existing type tree. As another example, the processor 110 may calculate the similarity between the embedding of the representative keyword of a cluster and the embedding of the keywords of the leaf nodes in the existing type tree, and use the calculation result as a criterion for determining whether to connect the leaf nodes. In addition, the processor 110 may calculate the similarity between the cluster and the existing node based on the overlap between the keywords and the distance between the average document embeddings.

The processor 110 calculates the similarity between the cluster and the existing leaf node, and, based on the similarity, determines whether to merge the cluster into the existing node, connect the cluster as the subnode of the existing node, or configured the cluster as a new node of an equal or higher level to the existing node and connect the cluster to the type tree.

For a specific example, when it is assumed that the representative keyword of the generated cluster is the "bicycle road damage" and the "road damage" and "sidewalk damage" exist as middle category nodes L2 as the leaf nodes of the existing type tree, the similarity between the cluster and the "road damage" node is 0.5 and the similarity with the 'sidewalk damage' node is 0.45, which are lower than the reference value (e.g., 0.6), the processor 110 may configured "bicycle road damage" as the new middle category node L2 of the major category node L1 "Safety" and directly connect the middle category node L2.

That is, when an appropriate connection point does not exist in the lower nodes of the existing type tree, the processor 110 inserts the cluster as a new type or expands the structure itself. When the number of levels of the existing type tree is set to 3, the existing type tree is configured with a 3-level hierarchical structure of major category, middle category, and minor category, and the processor 110 is configured to arrange a new cluster as a minor category item under a middle category item. However, when the similarity between the middle category node and the cluster is below a predetermined threshold, the cluster may be promoted and arranged as a middle category or major category based on the similarity with the major category item.

In this embodiment, when the leaf node most similar to the cluster in the existing type tree is the middle category node, the processor 110 connects the cluster to the subnode (minor category) of the middle category node. When the leaf node most similar to the cluster in the existing type tree is the minor category node, the cluster is either incorporated into the existing minor category node or merged with the existing minor category by modifying its name. When there is no similar node in the existing type tree, the cluster is temporarily arranged under the other types in the existing type tree. For other types that are repeatedly introduced, a new middle category or major category node is generated to expand the tree structure.

The processor 110 provides a manager with a recommended insertion path for the cluster (e.g., traffic facility safety > road > bicycle road damage) through the output interface device 160. The manager may approve, modify, or directly specify the recommended insertion path.

The process of arranging clusters in the existing type tree is a key operation in generating a continuously expandable type tree structure, going beyond simply connecting minor category types to the existing type tree, which is a crucial operation in the present invention. The system 100 may automatically arrange clusters in the type tree and, depending on the configuration, allow the manager intervention. In this case, the system 100 proceeds in a manner of proposing to the manager the insertion position of the cluster in the type tree. The manager intervention can be linked to domain policies.

The processor 110 outputs the hierarchical structure of the type tree and the type names corresponding to each node in the type tree through the output interface device 160. During this process, the processor 110 may additionally output one of the number and frequency of unstructured documents corresponding to leaf nodes in the type tree or a combination thereof. The user (e.g., manager, administrator) of the system 100 may confirm the hierarchical structure of the type tree, the type names included in the type tree, and the number or frequency of unstructured documents corresponding to each type name. Based on this information, the user may visually grasp the distribution of the types, and the output results of the system 100 may therefore be utilized for policy formulation or budget allocation.

Meanwhile, although not illustrated in FIG. 2, the system 100 may transmit information about other types in the type tree to the manager through the communication device 120 or the output interface device 160. For example, the system 100 may send a notification to the administrator terminal through the communication device 120 when the importance of a type that has not been properly classified changes or its frequency increases, so that the improperly classified type may be managed by the manager. Specifically, in this case, the system 100 may propose to the manager to promote the type to a new type or to merge the type with an existing node.

A specific embodiment of the management of other types will be described below.

The system 100 notifies the manager in real time or periodically when the minor category type is assigned to the other category. The system 100 continuously monitors the number of applications, cluster similarity, and time elapsed for minor category types classified as other types.

Furthermore, when the following promotion conditions are met, the system 100 proposes to the manager that the other type be promoted to a formal type.
(1) The number of documents is greater than or equal to a specific criterion within a certain period of time.
(2) The cluster quality indicator exceeds a certain criterion.
(3) Unstructured documents containing keyword groups composed of the same object and state continue to accumulate.

When the promotion conditions are met, the system 100 extracts an appropriate classification type from documents in the other type category through the above-described operations (S220 to S250) and proposes to the administrator the generation of a parent node in the existing type tree or a separate new node to connect the clusters generated from the other type category. In this case, the manager may review the proposal contents of the system 100 and select one of the following.
(1) Promoting: Confirm as a new type and insert into the tree
(2) Merging: Merge into an existing similar type
(3) Suspending: Maintain Other Type status

The other type node in the type tree is intended to manage documents with potential type potential as potential type candidates. In other words, the other type node acts as a holding space for unstructured documents whose types have not yet been confirmed, serving as a safety net for automation. The system 100 may expand and continuously maintain the type tree by determining whether other types satisfy promotion conditions and by providing notifications to the manager.

Hereinafter, the procedure for training and utilizing the AI-based classifier based on the constructed type tree will be described.

Operation S260 is an operation of training an automatic document classifier.

This operation is an operation of training the automatic classifier based on the refined type tree and clustering results. The classifier training in this operation may utilize weak supervision or semi-supervised learning using pseudo-labels based on the clustering results. For example, the system 100 may generate and apply soft labels based on the confidence scores of individual unstructured documents during the classifier training. The system 100 may preferentially utilize the central document of the cluster for the soft label. That is, the system 100 may perform confidence-based training by placing a high weight on the central document of the cluster. The central document of the cluster may be determined based on the embedding of the representative keywords of the cluster, the document embedding mean, and/or the extreme points of the distribution.

The processor 110 configures the first unstructured document as input data, configures, as a label, a type name of a leaf node in the type tree to which the first unstructured document belongs, and generates a classifier model having a function of automatically classifying the unstructured document through machine learning.

A specific embodiment of operation S260 will be described below.

This operation is a process of training a machine learning or deep learning-based classifier based on minor category labels defined through clustering and type refinement. In this case, it should be noted that the labels used here are based on refined clusters and therefore are not complete ground truth (label). In other words, the classifier in the present invention is trained using weak supervision or semi-supervised learning techniques.

To perform this operation, the following are required: a list of unstructured documents corresponding to the minor category nodes L3 included in the (refined) type tree, the text of each document, representative keywords, document embeddings (the first or second document embedding), and the reliability scores of the documents within the cluster assigned based on the quality score of the cluster. In other words, the processor 110 assigns confidence scores to unstructured documents within the refined cluster based on the quality score of the cluster.

First, the processor 110 constructs pseudo-label-based data. Specifically, the processor 110 assigns the minor category of the type tree generated for each cluster as a document label (soft label) and considers documents closer to the cluster center as more reliable training data. In other words, the processor 110 assigns not only a label but also a confidence score based on the cluster quality score to unstructured documents within the cluster corresponding to the minor category.

Next, the processor 110 configures a classifier model. For example, the following classifier models may be applied.
- A text classifier combining a Bidirectional Encoder Representations from Transformers (BERT)-based model with a classification head
- A Recurrent Neural Network/Convolutional Neural Network(RNN/CNN)-based classifier
- Traditional machine learning models such as Extreme Gradient Boosting (XGBoost) or Light Gradient Boosting Machine (LightGBM)

In addition to the classifier models listed above, various other models may be utilized.

Next, the processor 110 trains the configured classifier model based on the pseudo-labels and confidence scores assigned to the document. The classifier model may be trained using the weak supervision techniques that include confidence weights, or the semi-supervised learning technique such as self-training or co-training.

The processor 110 inputs the document embedding (first document embedding or second document embedding) of an unstructured document into a classifier, calculates a loss (e.g., KL-divergence, confidence-weighted loss, etc.) based on the soft labels assigned to the document, and trains the classifier to reduce the loss.

The processor 110 may utilize various learning methods in addition to the learning methods (learning algorithms, loss functions) described above.

As a result of this operation, the processor 110 may acquire the trained document classifier. Additionally, the processor 110 may acquire type-specific performance indicators and confidence-based document prediction results.

This operation is an operation of generating an automatic classifier applicable in real time based on the refined type structure. The pseudo-label-based weak supervision applied in this operation is a method that may achieve practical classification performance even without a complete ground truth. The present invention may secure the generalization performance of the classifier by reflecting the cluster quality and label uncertainty during the classifier training process.

Operation S270 is an operation of receiving unstructured documents to be classified.

The processor 110 receives one or more second unstructured documents through the communication device 120 or the input interface device 150. The second unstructured documents, which are documents to be classified using the classifier model, may be free-form natural language documents describing objects and their states, similar to the first unstructured document. Like the first unstructured document, the second unstructured document may also be assigned the meta information. For example, the meta information may include the time of document receipt, the time of an incident, and the location of incident.

Operation S280 is an operation for classifying the type of the unstructured document.

The processor 110 inputs the second unstructured document (more precisely, a document embedding) to the classifier model trained in operation S260 to acquire the probability for the type name of the second unstructured document. Furthermore, the processor 110 may output the type name of the second unstructured document through the output interface device 160. The user (e.g., an administrator) of the system 100 may view the classification results of one or more second unstructured documents.

The processor 110 may automatically recommend the type to which the document belongs to the user based on the probability output from the classifier. In addition, the processor 110 may also present the top n candidate type names based on distance-based matching with existing types and/or type-specific probabilities output from the classifier.

A specific embodiment of operation S280 will be described below.

This operation is an operation of automatically determining the type of newly introduced unstructured document using a pre-trained classifier. The system 100 may automatically map a cluster of new unstructured documents to an appropriate location in an existing type tree or perform a function that suggests a new document type based on probability. In addition, the system 100 may provide settings that allow a manager to confirm and reclassify the type determination results, thereby balancing between the speed and convenience of automation and the practicality of the manager intervention.

The processor 110 generates a document embedding (the first document embedding or the second document embedding) of a new unstructured document (the "second unstructured document") and inputs the generated document embedding to the pre-trained classifier. The classifier outputs a type-specific probability distribution or confidence score for the corresponding unstructured document. The processor 110 outputs the type (e.g., minor category) corresponding to the maximum probability value among the probabilities output by the classifier through the output interface device 160.

When the probability output from the classifier is less than or equal to the reference value, the processor 110 determines that the situation requires manager review and presents type candidates (the top N types) including the type corresponding to the highest probability to the manager. The manager may take actions such as confirming, modifying, or suspending the type.

This operation is a practical automation operation that applies the previously generated type tree and classifier to determine the type of new unstructured document. This operation may be performed fully automatically, or the classification of unstructured documents may be performed by combining probability-based recommendations and manager review. The manager feedback may be utilized in the classifier training in operation S260. In this case, a continuous learning loop may be established.

Operation S290 is a report generation operation.

In this operation, statistics, search, and reports are generated based on the type classification results in operation S280. Based on the refined type tree, the system 100 may generate and output time (e.g., document creation time or event occurrence time), region (e.g., event occurrence region), and type-specific statistical figures. In addition, the system 100 provides type-based search and filtering. The report generated by the system 100 in this operation may be utilized in the analysis process for public policy formulation. In other words, in this operation, the system 100 provides users of the system 100 with various functions, such as type-specific statistics, search, and reports, based on the refined type tree and automatic classifier, thereby expanding unstructured document data into a quantitative analysis tool and assisting administrative decision-making and policy formulation.

The processor 110 may generate a report based on the classification results (type name) of the second unstructured document and the metadata of the second unstructured document, and output the report through the output interface device 160.

A specific embodiment of operation S290 will be described below.

First, the second unstructured document classified through operation S280 and its meta information are mapped to the major category, middle category, and minor category nodes of the type tree by the processor 110. Based on the major category, middle category, and minor category information included in the type tree, and the second unstructured document automatically classified by type and its meta information, the processor 110 provides the user with type-based statistics (graphs, tables), type-based search and filtering services, and the reports related to the type classification of the unstructured document.

For example, the processor 110 may provide the user with statistics graphs, such as document occurrence trends for each type, and tables, such as type-specific report state, in the form of a visualization dashboard. In addition, the processor 110 may provide the user with search results for type-specific unstructured documents or a list of documents similar to a specific unstructured document. The processor 110 may provide a user (e.g., administrator) of the system 100 with information on the time-series occurrence trends of the most frequent type of document over a certain period of time, or information on the regional occurrence distribution of the type over a certain period of time, among the second unstructured documents. This information provides important insights for users to respond appropriately to situations (e.g., deliver management instructions to relevant departments).

After operation S280 or S290, the processor 110 may update the existing type tree based on data from the second unstructured document alone or from a combination of the first unstructured document and the second unstructured document.

For example, the processor 110 may generate the keyword groups of each of the second unstructured documents using one of the large language model and the pre-trained machine learning model, generate the first document embeddings for the keyword groups of the second unstructured documents using the first embedding technique, and update the type tree based on the keyword groups of the second unstructured documents and the first document embeddings. The process of updating the type tree is described in operations S220 to S250, and therefore, a detailed description thereof will be omitted.

The above-described method of automatically updating a type tree for unstructured documents will be described with reference to the flow chart presented in the drawing. For simplicity, the method has been illustrated and described as a series of blocks, but the invention is not limited to the order of the blocks, and some blocks may occur with other blocks in a different order or at the same time as illustrated and described in the present specification. Also, various other branches, flow paths, and orders of blocks that achieve the same or similar result may be implemented. In addition, all the illustrated blocks may be not required for implementation of the methods described in the present specification.

Meanwhile, in the description with reference to FIGS. 2 to 7, each operation may be further divided into additional operations or combined into fewer operations according to an implementation example of the present invention. Also, some operations may be omitted if necessary, and an order between the operations may be changed. In addition, the contents of FIG. 1 may be applied to the contents of FIG. 2 even if other contents are omitted. Also, the contents of FIGS. 2 to 7 may be applied to the contents of FIG. 1.

Hereinabove, the device and method according to the present invention has been described. The present invention has the following features compared to the prior art. The present invention has the following features compared to the prior art.

### 1. Generation of Classification System Even Without Type

The conventional technology may classify documents based on predefined type systems, but the system may not process new types without human definition. However, in the present invention, the type system may be semi-automatically generated by performing clustering based on semantic similarity between documents, even in the initial state without the defined type. In other words, the present invention provides a system that automatically generates and evolves types even when no type is provided, and realizes a self-generating type classification structure not available in the conventional technology.

### 2. Integrated Structure of Semantic-based Clustering and Automatic Type Name Generation

The conventional technology determine the type of document based on keyword matching or rule-based conditions, resulting in a weak semantic connection between the classification system and the document content. However, the present invention includes a structure that automatically generates type names by applying various clustering algorithms in parallel or in an ensemble manner based on semantic similarity analysis using document embeddings, and by extracting key keywords from each cluster. The present invention provides a structure that naturally defines types and automatically generates names based on the semantic flow of a document set. Such a structure enables semantic-based type classification without prior human definition and supports the full automation of the entire process from clustering to the generation of minor category type names.

### 3. Automatic Expansion and Maintenance of Tree-Type System

The existing method often has a fixed type tree structure, and the insertion or merging of new types often relies on manual intervention. On the other hand, in the present invention, a new type may be automatically connected to an appropriate position within an existing tree, or when no similar type exists, temporarily suspend the new type as other types and handle automatic promotion and merge proposals, thereby enabling the management of the type tree as a living structure. In other words, the present invention dynamically maintains the tree-type structure and enables automatic evolution of the type structure based on the influx of new data.

### 4. Continuous Classifier Enhancement through Pseudo-Label-Based Weak Supervision

The existing machine learning classifiers may only be trained with a large amount of clearly labeled training data. In reality, assigning the ground truth to data is difficult due to resource limitations (humans have to individually determine and label each data item), making dataset construction nearly impossible. In other words, it is difficult for the existing classifier to determine which label should be assigned, and a large amount of resources must be allocated to assign labels.

On the other hand, according to the present invention, cluster-based weak labels (pseudo-labels) is generated and the cluster-based weak labels (pseudo-labels) is utilized together with confidence scores that reflect document centrality or cluster quality, thereby enabling the weak supervision or semi-supervised learning, and may use the cluster names (type names) as dataset labels. As a result, it is possible to train the classifier even when the labels are not fully refined. In addition, the present invention provides a structure for continuous improvement of the classifier based on the manager feedback or actual classification results.

### 5. Built-in Maintenance System of Other Type Management, Notification, Promotion, etc.

In the conventional system, other types are simply treated as remnants of existing types that may not be classified, and there is no reprocessing or promotion structure.

On the other hand, the present invention integrates a path for evolving other types into formal types within the system, including continuous inflow inspection, cluster quality monitoring, automatic tracking, condition-based promotion, and classification process through the manager notification.

In addition, according to the present invention, functions for sustainably maintaining and expanding the type system, including a dedicated management interface, notifications, sorting criteria, etc., for other types are provided.

In summary, the present invention is not merely a simple document classifier, but rather a technology for generating and organizing types in the absence of predefined categories, and for intelligently creating and operating a document type system that is capable of real-time classification, management, and expansion.

For reference, the components according to the embodiment of the present invention may be implemented in the form of software or hardware such as field programmable gate array (FPGA) or application specific integrated circuit (ASIC) and perform predetermined roles.

However, "components" are not limited to software or hardware, and each component may be configured to be in an addressable storage medium or to reproduce one or more processors.

Accordingly, for example, the component includes components such as software components, object-oriented software components, class components, and task components, processors, functions, attributes, procedures, subroutines, segments of a program code, drivers, firmware, a microcode, a circuit, data, a database, data structures, tables, arrays, and variables.

Components and functions provided within the components may be combined into a smaller number of components or further divided into additional components.

In this case, it will be appreciated that each block of a processing flowchart and combinations of the flowcharts may be executed by computer program instructions. Since these computer program instructions may be mounted in a processor of a general computer, a special computer, or other programmable data processing apparatuses, these computer program instructions executed through the process of the computer or the other programmable data processing apparatuses create means performing functions described in a block(s) of the flow chart. Since these computer program instructions may also be stored in a computer usable or computer readable memory of a computer or other programmable data processing apparatuses in order to implement the functions in a specific scheme, the computer program instructions stored in the computer usable or computer readable memory can also produce manufacturing articles including instruction means performing the functions described in the block(s) of the flowchart. Since the computer program instructions may also be mounted on the computer or the other programmable data processing apparatuses, the instructions performing a series of operation steps on the computer or the other programmable data processing apparatuses to create processes executed by the computer, thereby executing the computer or the other programmable data processing apparatuses may also provide steps for performing the functions described in a block(s) of the flowchart.

In addition, each block may indicate some of modules, segments, or codes including one or more executable instructions for executing a specific logical function(s). Further, it is to be noted that functions mentioned in the blocks occur regardless of a sequence in some alternative embodiments. For example, two blocks that are continuously illustrated may be simultaneously performed in fact or be performed in a reverse sequence depending on corresponding functions.

According to the present invention, it is possible to automatically generate the type tree for the document classification even in the state in which the document classification system has not been established.

In addition, according to the present invention, it is possible to flexibly expand the classification structure by incorporating new types into the existing document classification system even when new document types are generated.

In addition, according to the present invention, it is possible to not only automatically generate and utilize the document classification structure, but also automate tasks while allowing a certain degree of administrator intervention.

Further, according to the present invention, it is possible to reorganize the vast amount of document collection into the refined type structure (type tree) and utilize the type structure for search, statistics, policies, or the like.

Furthermore, according to the present invention, it is possible to continuously and automatically recognize the document types and maintain the document classification structure using the document classifier model generated based on the AI learning.

Effects which can be achieved by the present invention are not limited to the above-described effects. That is, other objects that are not described may be obviously understood by those skilled in the art to which the present invention pertains from the following description.

Although exemplary embodiments of the present invention have been disclosed above, it may be understood by those skilled in the art that the present invention may be variously modified and changed without departing from the scope and spirit of the present invention described in the following claims.

## Claims

1. A method of automatically updating a type tree for unstructured documents, which is performed by a system for automatically generating a type tree for unstructured documents, the method comprising:
receiving, through a communication device or an input interface device, big data including a plurality of first unstructured documents and a preset type tree for classifying unstructured documents;
generating keyword groups of each of the first unstructured documents using one of a large language model and a pre-trained machine learning model, and generating first document embeddings for the keyword groups using a first embedding technique;
generating one or more clusters by clustering the first unstructured documents using a predetermined semantic-based clustering algorithm based on the first document embeddings;
refining the clusters by performing a quality assessment on the clusters based on a predetermined quality indicator;
determining representative keywords for each of the clusters based on one of a frequency of occurrence of the keyword groups of the first unstructured documents belonging to each of the clusters and a distance between the keyword groups calculated based on the first document embeddings or a combination thereof;
determining, for each of the clusters, which one to apply among an operation of merging the cluster into an existing node of the type tree, an operation of adding the cluster as a new node of the type tree, and an operation of suspending processing of the cluster to update the type tree based on the determination result; and
outputting, through an output interface device, a type tree so as to output a hierarchical structure of the type tree and type names corresponding to each node included in the type tree.

2. The method of claim 1, wherein the refining of the cluster includes:
calculating quality scores for each of the clusters by performing a quality assessment on the cluster based on the predetermined quality indicator;
determining, based on the quality score, whether the cluster is utilized in updating the type tree and configuring the cluster to one of a utilized state and a suspended state; and
merging clusters whose mutual similarity is greater than or equal to a threshold value among the clusters in the utilized state.

3. The method of claim 2, wherein the calculating of the quality score includes calculating the quality scores for each of the clusters by applying a second embedding technique different from the first embedding technique.

4. The method of claim 1, wherein the outputting of the type tree includes outputting one of the number and frequency of unstructured documents corresponding to a leaf node included in the type tree or a combination thereof.

5. The method of claim 1, wherein the first unstructured document is a natural language document describing an object and a state of the object.

6. The method of claim 1, wherein the quality indicator is an indicator calculated based on one of a keyword sharing rate, a semantic distance, a cluster consistency, and a cluster size or a combination thereof,
the keyword sharing rate represents a keyword overlap degree between the keyword groups of the unstructured document included in the cluster,
the semantic distance represents an average distance between second document embeddings calculated by applying a second embedding technique different from the first embedding technique to the keyword group of the unstructured document included in the cluster,
the cluster consistency represents a reciprocal of the number of extreme points in a probability distribution of the second document embeddings, and
the cluster size represents the number of unstructured documents included in the cluster.

7. The method of claim 1, further comprising configuring the first unstructured document as input data, configuring, as a label, a type name of a leaf node in the type tree to which the first unstructured document belongs, and generating a classifier model having a function of automatically classifying the unstructured document through machine learning.

8. The method of claim 7, further comprising:
receiving, through the communication device or the input interface device, one or more second unstructured documents;
classifying the unstructured documents by inputting the second unstructured document to the classifier model to acquire a type name of the second unstructured document; and
outputting, through the output interface device, the type name of the second unstructured document.

9. The method of claim 8, further comprising:
generating keyword groups of each of the second unstructured documents using one of the large language model and the pre-trained machine learning model, and generating the first document embeddings for the keyword groups of the second unstructured documents using the first embedding technique; and
updating the type tree based on the keyword groups of the second unstructured documents and the first document embeddings.

10. A system for automatically updating a type tree for unstructured documents, comprising:
a processor; and
a memory storing one or more commands executed by the processor,
wherein the one or more commands include:
a command to receive, through a communication device or an input interface device, big data including a plurality of first unstructured documents and a preset type tree for classifying unstructured documents;
a command to generate keyword groups of each of the first unstructured documents using one of a large language model and a pre-trained machine learning model and generate first document embeddings for the keyword groups using a first embedding technique;
a command to generate one or more clusters by clustering the first unstructured documents using a predetermined semantic-based clustering algorithm based on the first document embeddings;
a command to refine the clusters by performing a quality assessment on the clusters based on a predetermined quality indicator;
a command to determine representative keywords for each of the clusters based on one of a frequency of occurrence of the keyword groups of the first unstructured documents belonging to each of the clusters and a distance between the keyword groups calculated based on the first document embeddings or a combination thereof;
a command to determine, for each of the clusters, which one to apply among an operation of merging the cluster into an existing node of the type tree, an operation of adding the cluster as a new node of the type tree, and an operation of suspending processing of the cluster to update the type tree based on the determination result; and
a command to output the type tree so as to output a hierarchical structure of the type tree and type names corresponding to each node included in the type tree through an output interface device.

11. The system of claim 10, wherein the command to refine the cluster includes:
a command to calculate quality scores for each of the clusters by performing a quality assessment on the cluster based on the predetermined quality indicator;
a command to determine, based on the quality score, whether the cluster is utilized in updating the type tree and configure the cluster to one of a utilized state and a suspended state; and
a command to merge clusters whose mutual similarity is greater than or equal to a threshold value among the clusters in the utilized state.

12. The system of claim 10, wherein the command to output the type tree includes a command to output one of the number and frequency of unstructured documents corresponding to a leaf node included in the type tree or a combination thereof.

13. The system of claim 10, wherein the first unstructured document is a natural language document describing an object and a state of the object.

14. The system of claim 10, wherein the quality indicator is an indicator calculated based on one of a keyword sharing rate, a semantic distance, a cluster consistency, and a cluster size or a combination thereof,
the keyword sharing rate represents a keyword overlap degree between the keyword groups of the unstructured document included in the cluster,
the semantic distance represents an average distance between second document embeddings calculated by applying a second embedding technique different from the first embedding technique to the keyword group of the unstructured document included in the cluster,
the cluster consistency represents a reciprocal of the number of extreme points in a probability distribution of the second document embeddings, and
the cluster size represents the number of unstructured documents included in the cluster.

15. The system of claim 10, wherein the one or more commands further include a command to configure the first unstructured document as input data, configure, as a label, a type name of a leaf node in the type tree to which the first unstructured document belongs, and generate a classifier model having a function of automatically classifying the unstructured document through machine learning.
